(19) Europäisches Patentamt / European Patent Office / Office européen des brevets

(11) **EP 2 538 194 A1**

(12) **EUROPEAN PATENT APPLICATION**

(43) Date of publication:
**26.12.2012 Bulletin 2012/52**

(51) Int Cl.:
**G01M 3/32** (2006.01)     **F01P 11/18** (2006.01)
**G01F 25/00** (2006.01)

(21) Application number: **12172565.9**

(22) Date of filing: **19.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.06.2011 US 201113166973**

(71) Applicant: **General Electric Company Schenectady, NY 12345 (US)**

(72) Inventors:
• **Gu, Yill**
  **Schenectady, NY New York 12345 (US)**
• **Annin, Scott Victor**
  **Greenville, SC South Carolina 29615 (US)**

• **Byrd, Douglas Scott**
  **Greenville, SC South Carolina 29602 (US)**
• **Hains, John Victor**
  **Greenville, SC South Carolina 29615 (US)**
• **Khaliq, Abdul**
  **411 Al Manamh (BH)**
• **Vandevelde, John Patrick**
  **Greenville, SC South Carolina 29615 (US)**
• **Whitright, Brian James**
  **Greenville, SC South Carolina 29615 (US)**

(74) Representative: **Cleary, Fidelma
GE International Inc.
Global Patent Operation-Europe
15 John Adam Street
London WC2N 6LU (GB)**

(54) **Fluid Leak Detection System**

(57)    A fluid leak detection system (10) is provided, and includes a fluid conduit (20), a fluid-cooled device (30) having an inlet (60) and an outlet (62), an inlet flow meter (24), an outlet flow meter (36), and a controller (50). The inlet flow meter (24) is fluidly connected to the fluid conduit (20). The inlet flow meter (24) monitors the inlet (60) of the fluid-cooled device (30) for an inlet (60) temperature and an inlet flow rate. The inlet flow meter (24) has an inlet flow meter (24) drift versus process fluid temperature curve. The outlet flow meter (36) is fluidly connected to the fluid conduit (20). The outlet flow meter (36) monitors the outlet (62) of the fluid-cooled device (30) for an outlet (62) temperature and an outlet flow rate. The outlet flow meter (36) has an outlet flow meter (36) drift versus process fluid temperature curve. The controller (50) is in communication with the inlet flow meter (24) and the outlet flow meter (36).

FIG. 1

EP 2 538 194 A1

**Description**

BACKGROUND OF THE INVENTION

The subject matter disclosed herein relates to a fluid leak detection system, and more specifically to a fluid leak detection system having a controller with control logic for monitoring the fluid leak detection system and determining if a leak condition exists.

Traditionally, gas turbine flame detectors have been used to ensure the presence of a flame during gas turbine light-off. Some flame detectors employ a cooling coil that uses water as a cooling medium to keep a flame detector sensor below a threshold temperature. However, a leak may occur in the cooling water circuit. Leakage of the cooling water may cause a casing of the gas turbine or components located within the casing to need replacement. Replacing the casing of the gas turbine or the components located within the casing may become time-consuming and costly.

Cooling water may also be employed to cool a liquid fuel purge system as well in a gas turbine. Specifically, cooling water may be used to cool a three way liquid fuel valve. Cooling water may also be employed to cool check valves of the liquid fuel purge system. Specifically, cooling water is used to maintain an internal check valve or three way valve temperature below the coking threshold of the liquid fuel. However, a leak may also occur in the cooling water circuit of the liquid fuel purge system, which may also cause the water cooled valve to operate incorrectly. The leak may also cause casing or other gas turbine component issues.

BRIEF DESCRIPTION OF THE INVENTION

According to one aspect of the invention, a fluid leak detection system is provided and includes a fluid conduit, a fluid-cooled device having an inlet and an outlet, an inlet flow meter, an outlet flow meter, and a controller. The inlet flow meter is fluidly connected to the fluid conduit. The inlet flow meter monitors the inlet of the fluid-cooled device for an inlet temperature and an inlet flow rate. The inlet flow meter has an inlet flow meter drift versus process fluid temperature curve. The outlet flow meter is fluidly connected to the fluid conduit. The outlet flow meter monitors the outlet of the fluid-cooled device for an outlet temperature and an outlet flow rate. The outlet flow meter has an outlet flow meter drift versus process fluid temperature curve. The controller is in communication with the inlet flow meter and the outlet flow meter. The controller includes a memory having the inlet flow meter drift versus process fluid temperature curve and the outlet flow meter drift versus process fluid temperature curve stored therein. The inlet flow meter drift versus process fluid temperature curve is substantially identical to the outlet flow meter drift versus process fluid temperature curve. A zero flow condition where flow of fluid in the fluid conduit is substantially halted and the inlet flow rate and the outlet flow rate are saved in the memory of the controller as well.

The controller includes control logic for monitoring the inlet flow meter for the inlet temperature and the inlet flow rate and the outlet flow meter for the outlet temperature and the outlet flow rate. The controller also includes control logic for compensating measurement drift due to the temperature of the process fluid and the percentage of error in the respective flow rates. Specifically, the controller includes control logic for determining the difference between the inlet temperature and the outlet temperature. The memory of the controller includes a set of data stored therein that indicates a percentage of error in flow rate based on the difference between the inlet temperature and the outlet temperature. The controller further includes control logic for determining the difference between the inlet flow rate and the outlet flow rate. The controller includes control logic for calculating an actual flow rate difference between the inlet flow rate and the outlet flow rate. The actual flow rate difference is based on the percentage of error in flow rate, the difference between the inlet flow rate and the outlet flow rate, and the zero flow condition. The controller also includes control logic for indicating a leak condition in the fluid leak detection system if the actual flow rate difference is above a threshold value.

These and other advantages and features will become more apparent from the following description taken in conjunction with the drawings.

BRIEF DESCRIPTION OF THE DRAWING

Embodiments of the present invention will now be described, by way of example only, with reference to the accompanying drawings in which:

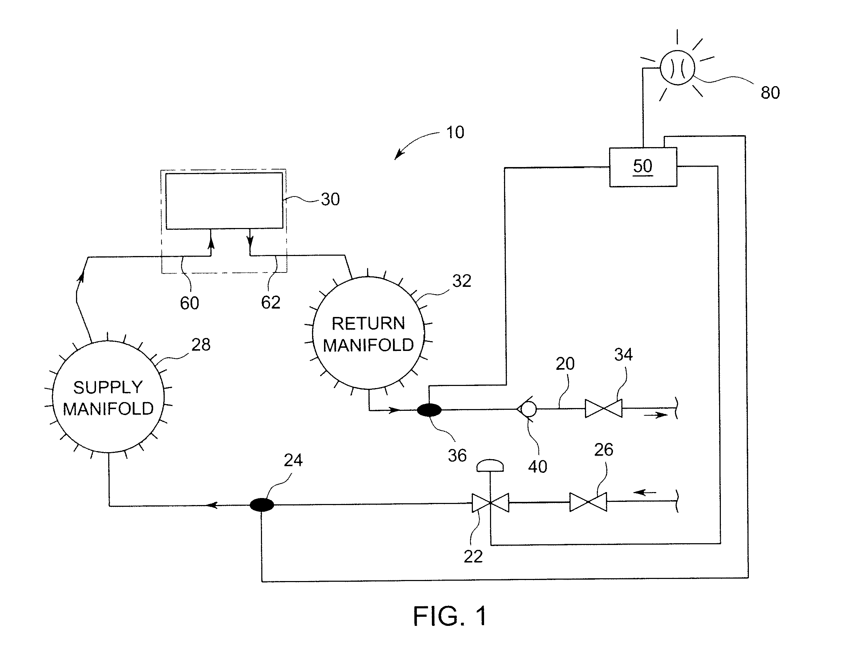

FIG. 1 is an exemplary schematic illustration of a fluid leak detection system.

The detailed description explains embodiments of the invention, together with advantages and features, by way of example with reference to the drawings.

DETAILED DESCRIPTION OF THE INVENTION

As used herein the terms module and sub-module refer to an application specific integrated circuit (ASIC), an electronic circuit, a processor (shared, dedicated, or group) and memory that executes one or more software or firmware programs, a combinational logic circuit, and/or other suitable components that provide the described functionality.

FIG. 1 is an illustration of an exemplary fluid leak detection system indicated by reference number 10. The fluid leak detection system 10 includes a fluid conduit 20, a shutoff valve 22, an inlet flow meter 24, an inlet valve 26, a supply manifold 28, a fluid-cooled device 30, a return manifold 32, an outlet valve 34, an outlet flow meter 36, and a check valve 40. In one exemplary embodiment, the fluid leak detection system 10 is part of a cooling circuit employed in a gas turbine (not shown), and the fluid-cooled device 30 is a gas turbine flame detector that detects the presence of a flame during gas turbine light-off. Alternatively, in another exemplary embodiment the fluid-cooled device 30 may be employed in a liquid fuel purge system, where the fluid-cooled device 30 is either a three way liquid fuel valve or a check valve. However, it is to be understood that the fluid leak detection system 10 may be used in a variety of applications. In one embodiment a cooling medium such as, for example, water may flow through the fluid conduit 20 and is used to conduct heat away from the fluid-cooled device 30.

The inlet valve 26 is a manual valve that is fluidly connected to the fluid conduit 20 and normally open during operation of the fluid leak detection system 10. The shutoff valve 22 is located downstream of the inlet valve 26 and is fluidly connected to and selectively blocks the amount of fluid that flows through the fluid conduit 20. Specifically, the shutoff valve 22 is employed to substantially block the flow of fluid to the fluid leak detection system 10 based on certain operating conditions. Downstream of the shutoff valve 22 is the inlet flow meter 24. In one embodiment, the inlet flow meter 24 is a Coriolis flow meter that measures the mass flow rate of fluid traveling through the fluid conduit 20. However, it is to be understood that other types of flow meters may be used as well. The inlet flow meter 24 monitors an inlet 60 that is fluidly connected the fluid-cooled device 30 for an inlet temperature and an inlet flow rate. The supply manifold 28 is located downstream of the inlet flow meter 24, where the inlet flow meter 24 measures the flow rate and the temperature into the supply manifold 28.

An outlet 62 of the fluid-cooled device 30 is fluidly connected to the return manifold 32. The return manifold 32 is located upstream of the outlet flow meter 36. In one embodiment, the outlet flow meter 36 is a Coriolis flow meter that measures the mass flow rate of the fluid traveling through the fluid conduit 20. However other types of flow meters may be used as well. The outlet flow meter 36 monitors the outlet 62 of the fluid-cooled device 30 for an outlet temperature and an outlet flow rate.. The outlet flow meter 36 is situated upstream of the check valve 40. The check valve 40 is employed to prevent the ingression of contaminants into the fluid leak detection system 10, and is also employed to reduce or substantially prevent the occurrence of backflow into the fluid conduit 20. The check valve 40 is located upstream of the outlet valve 34. The outlet valve 34 is typically a manual valve that is normally open during operation of the fluid leak detection system 10. The inlet valve 26 and the outlet valve 26 may be isolation valves typically employed during maintenance or system issues.

The inlet flow meter 24 and the outlet flow meter 36 are both configured for monitoring fluid temperature and fluid flow rate of the fluid conduit 20 at their respective locations. Both the inlet flow meter 24 and the outlet flow meter 36 include substantially identical characteristics such as a drift versus process fluid curve, accuracy and tolerance. The drift versus process fluid curve represents the change in flow rate measurement accuracy of a flow meter that is caused by changes in ambient temperature. Moreover, in one embodiment, the inlet flow meter 24 and the outlet flow meter 36 are substantially identical and are produced by the same manufacturer.

A controller 50 is provided and is in communication with the shutoff valve 22, the inlet flow meter 24, and the outlet flow meter 36. Specifically, the controller 50 includes control logic for monitoring the inlet flow meter 24 and the outlet flow meter 36, as well as control logic for selectively actuating the shutoff valve 22. In one exemplary embodiment, the controller 50 is a turbine controller that is employed for controlling various functions of a turbine (not shown) such as fuel and emissions control, as well as other functions of a gas turbine. The controller 50 includes a memory as well, where the drift versus process temperature curve, accuracy and tolerance of both the inlet flow meter 24 and the outlet flow meter 36 are stored in the memory of the controller 50.

The memory of the controller 50 also includes a zero flow condition, where flow of the fluid in the fluid conduit 20 is substantially halted, and the inlet flow rate at the inlet 60 and the outlet flow rate at the outlet 62 are compared to one another and stored in the memory of the controller 50. Specifically, during zeroing of the controller 50, the flow of fluid through the fluid conduit 20 is substantially halted for a specified period of time where the fluid conduit 20 is filled with fluid. As a result, there is substantially zero flow of fluid through the fluid conduit 20, which may lead to a corresponding reading of zero flow output by both the inlet flow meter 24 and the outlet flow meter 36. However, sometimes the inlet flow meters 24 and outlet flow meters 36 may produce a non-zero flow rate during a time of substantially zero flow. In this case, the non-zero flow rate from the inlet flow meters 24 and outlet flow meters 36 may be used as the zero flow condition.

The memory of the controller 50 also includes a set of data that indicates a percentage of error in flow rate in the fluid conduit 20 based on the temperature at the inlet 60 and the outlet 62. The difference in temperature between the inlet 60 and the outlet 62 is typically referred to as the sensing drift difference between the inlet flow meter 24 and the outlet flow meter 36. As the difference between the temperature at the inlet 60 and the outlet 62 increase, the percentage of error in flow rate in the fluid conduit 20 increases. The percentage of error in the flow rate may be based on the maximum flow rate in the fluid conduit 20.

The controller 50 includes control logic for monitoring the inlet flow meter 24 for the inlet temperature and flow rate at the inlet 60, and the outlet flow meter 36 for the outlet temperature and flow rate at the outlet 62. The controller 50 includes control logic for determining the difference between the inlet temperature from the inlet flow meter 24 and the outlet temperature from the outlet flow meter 36. The controller 50 also includes control logic for determining the difference between the inlet flow rate from the inlet flow meter 24 and the outlet flow rate from the outlet flow meter 36.

The controller 50 further includes control logic for calculating an actual flow rate difference between the inlet flow meter 24 and the outlet flow meter 36. Specifically, the actual flow rate difference represents the real difference between the flow of fluid in the fluid conduit 20 at the inlet flow meter 24 and the outlet flow meter 36 during operation of the fluid leak detection system 10. The controller 50 calculates the actual flow rate difference based on the percentage of error in flow rate, the zero flow condition, and the difference between the inlet flow rate from the inlet flow meter 24 and the outlet flow rate from the outlet flow meter 36. The actual flow rate difference may be calculated by subtracting the inlet flow $Flow_{in}$ from the outlet flow $Flow_{out}$. Specifically, because the inlet flow meter 24 and the outlet flow meter 36 both share the same error and tolerance,

$$m_{errori} = m_{erroro}$$

where $m_{errori}$ is the error of the mass flow rate at the inlet flow meter 24 and $m_{erroro}$ is the error of the mass flow rate at the outlet flow meter 36. Moreover, when the flow of fluid in the fluid conduit 20 is substantially halted, then

$$m_{readi} = m_{actuali} + m_{errori} \approx 0$$

and

$$m_{reado} = m_{actualo} + m_{erroro} \approx 0$$

where $m_{readi}$ is the mass flow rate read by the inlet flow meter 24, $m_{actuali}$ is the actual mass flow rate at the inlet flow meter 24, and $m_{errori}$ is the error in mass flow rate at the inlet flow meter 24 read by the controller 50. Also, $m_{reado}$ is the mass flow rate read by the outlet flow meter 36, $m_{actualo}$ is the actual mass flow rate at the outlet flow meter 36, and $m_{erroro}$ is the error in mass flow rate at the inlet flow meter 36 read by the controller 50. In the event there is fluid flow through the fluid conduit 20 and the fluid leak detection system 10 is substantially leak free, then:

$$m_{readi} - m_{reado} = m_{actuali} - m_{actualo} + (m_{errori} - m_{erroro}) = m_{actuali} - m_{actualo} \approx 0 ,$$

and

$$\frac{m_{readi}}{m_{reado}} = \frac{m_{actuali} + m_{errori}}{m_{actualo} + m_{erroro}} \approx 1$$

The controller 50 includes control logic for indicating a leak condition in the fluid leak detection system 10 if the actual flow rate difference is above a threshold value. For example, in one embodiment if the difference between the mass flow rate $m_{readi}$ read by the inlet flow meter 24 and the mass flow rate $m_{reado}$ read by the outlet flow meter 36 is above the threshold value, then the controller 50 determines that a leak condition in the fluid leak detection system 10 has occurred. Specifically, in one embodiment the fluid leak detection system 10 includes an indicator or an alarm 80 that is in communication with the controller 50, where the alarm 80 emits a visual indicator or sound to alert an operator that a leak condition has occurred. In one example, the controller 50 may also be in communication with a computing screen, which is not illustrated, where the controller 50 sends a signal to the screen to display a visual indicator that informs an operator that the leak condition has occurred.

Several types of leak conditions exist. In one embodiment, the controller 50 may include control logic for calculating a level one leak condition, which occurs if the actual flow rate difference is above a level one threshold value. In this situation, the controller 50 includes control logic for sending a signal to the alarm 80. The alarm will then emit a level one tone or visual indicator. A level two leak condition may occur as well if the actual flow rate difference is above a level two threshold value. The level two threshold value is greater than the level one threshold value. During the level two leak the controller 50 includes control logic for sending a signal to the alarm 80 for emitting a level two tone or indicator. The level two tone or indicator is typically louder or brighter than the level one tone or indictor, in an effort to alert an operator of a leak condition that may require greater attention.

In addition to the alarm 80, two different approaches may be used as well if the level two leak condition occurs. In a first approach, the controller 50 is in communication with a turbine (not shown) for sending a signal to the turbine indicating that a false outage condition is created or induced in an effort to substantially reduce the risk of turbine trip and to reduce the amount of fluid leakage. Alternatively, in another embodiment the controller 50 further includes control logic for sending a signal to the shutoff valve 22 to substantially block the flow of fluid to the inlet 60 of the fluid-cooled device 30. Thus, in the event a leak is detected, fluid may no longer flow through the fluid conduit 20, which may reduce the occurrence of fluid leakage in the system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A fluid leak detection system (10), comprising:

    a fluid conduit (20);
    a fluid-cooled device (30) having an inlet (60) and an outlet (62);
    an inlet flow meter (24) fluidly connected to the fluid conduit (20), the inlet flow meter (24) monitoring the inlet (60) of the fluid-cooled device (30) for an inlet (60) temperature and an inlet flow rate, the inlet flow meter (24) having an inlet flow meter (24) drift versus process fluid temperature curve;
    an outlet flow meter (36) fluidly connected to the fluid conduit (20), the outlet flow meter (36) monitoring the outlet (62) of the fluid-cooled device (30) for an outlet (62) temperature and an outlet flow rate, the outlet flow meter (36) having an outlet flow meter (36) drift versus process fluid temperature curve;
    a controller (50) in communication with the inlet flow meter (24) and the outlet flow meter (36), the controller (50) including a memory having the inlet flow meter (24) drift versus process fluid temperature curve and the outlet flow meter (36) drift versus process fluid temperature curve stored therein, the inlet flow meter (24) drift versus process fluid temperature curve substantially identical to the outlet flow meter (36) drift versus process fluid temperature curve, and a zero flow condition where a fluid flow in the fluid conduit (20) is substantially halted and values of the inlet flow rate and the outlet flow rate are saved in the memory of the controller (50), the controller (50) including:

        a control logic for monitoring the inlet flow meter (24) for the inlet temperature and the inlet flow rate and the outlet flow meter (36) for the outlet (62) temperature and the outlet flow rate;
        a control logic for determining the difference between the inlet (60) temperature and the outlet (62) temperature, the memory of the controller (50) including a set of data stored therein that indicates a percentage of error in flow rate based on the difference between the inlet (60) temperature and the outlet (62) temperature;

a control logic for determining the difference between the inlet flow rate and the outlet flow rate;

a control logic for calculating an actual flow rate difference between the inlet flow rate and the outlet flow rate, the actual flow rate difference based on the percentage of error in flow rate, the difference between the inlet flow rate and the outlet flow rate, and the zero flow condition; and

a control logic for indicating a leak condition in the fluid leak detection system (10) if the actual flow rate difference is above a threshold value.

2. The fluid leak detection system (10) of claim 1, further comprising an inlet valve (26) fluidly connected to the fluid conduit (20) an outlet valve (34) fluidly connected to the fluid conduit (20), wherein the inlet valve (26) and the outlet valve (34) are manual valves.

3. The fluid leak detection system (10) of claim 1 or 2, further comprising a shutoff valve (22) fluidly connected to and selectively blocking the fluid flow through the fluid conduit (20).

4. The fluid leak detection system (10) of claim 3, wherein the controller (50) is in communication with the shutoff valve (22), and wherein the controller (50) includes control logic for selectively sending a signal to the shutoff valve (22) to substantially block the flow of fluid to the inlet (60) of the fluid-cooled device (30).

5. The fluid leak detection system (10) of any of claims 1 to 4, wherein the threshold value further includes a level one threshold value and a level two threshold value, wherein the level two threshold value is greater than the level one threshold value.

6. The fluid leak detection system (10) of claim 5, wherein if the controller (50) detects the level one threshold value, then controller (50) includes control logic for sending a signal to an alarm (80), wherein the signal instructs the alarm (80) to emit one of a level one tone and a level one visual indicator.

7. The fluid leak detection system (10) of claim 5 or 6, wherein if the controller (50) detects the level two threshold value, then controller (50) includes control logic for sending a signal to an alarm (80), wherein the signal instructs the alarm (80) to emit one of a level two tone and a level two visual indicator.

8. The fluid leak detection system (10) of claim 7, wherein if the controller (50) detects the level two threshold value, then controller (50) includes control logic for sending a signal to the shutoff valve (22) to substantially block the flow of fluid to the inlet (60) of the fluid-cooled device (30).

9. The fluid leak detection system (10) of claim 7, wherein if the controller (50) detects the level two threshold value, then controller (50) includes control logic for sending a signal to a turbine indicating that a false outage condition is to be induced.

10. The fluid leak detection system (10) of any preceding claim, further comprising a check valve (40) fluidly connected to the fluid conduit (20) and located downstream of the outlet flow meter (36).

11. The fluid leak detection system of any preceding claim, wherein the fluid-cooled device (30) is one of a gas turbine flame detector, a three way liquid fuel valve, and a check valve of a liquid fuel purge system.

12. The fluid leak detection system of any preceding claim, wherein the inlet flow meter (24) and the outlet flow meter (36) are both Coriolis flow meters for measuring a mass flow rate of the fluid flow traveling through the fluid conduit (20).

13. The fluid leak detection system of any preceding claim, wherein the inlet flow meter (24) and the outlet flow meter (36) include substantially identical accuracy and tolerance.

14. A turbine having the fluid leak detection system of any of claims 1 to 13.

FIG. 1

EP 2 538 194 A1

**Europäisches Patentamt**
**European Patent Office**
**Office européen des brevets**

# EUROPEAN SEARCH REPORT

Application Number

EP 12 17 2565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/110834 A1 (WEBER GUNTHER [US]) 19 June 2003 (2003-06-19) * abstract * * figures 1-3 * * paragraph [0002] * * paragraphs [0012] - [0016] * ----- | 1-14 | INV. G01M3/32 F01P11/18 G01F25/00 |
| Y | US 2009/148800 A1 (VALENTAS LOUIS SCOTT [US] ET AL) 11 June 2009 (2009-06-11) * abstract * * figure 3 * * paragraphs [0011], [0029] * * paragraphs [0032] - [0042] * ----- | 1-14 | |
| Y | WO 2011/019345 A1 (MICRO MOTION INC [US]; HAYS PAUL J [US]; WEINSTEIN JOEL [US]) 17 February 2011 (2011-02-17) * abstract * * figures 1,4,5,7 * * page 6, lines 19-23 * * page 8, line 11 - page 12, line 23 * * page 13, lines 6-19 * * page 16, line 13 - page 27, line 32 * ----- | 1-14 | TECHNICAL FIELDS SEARCHED (IPC) G01M F01P F01D G01F |

The present search report has been drawn up for all claims

| Place of search | Date of completion of the search | Examiner |
|---|---|---|
| The Hague | 22 October 2012 | Nelva-Pasqual, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 12 17 2565

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2012

| Patent document cited in search report | | Publication date | Patent family member(s) | | Publication date |
|---|---|---|---|---|---|
| US 2003110834 | A1 | 19-06-2003 | NONE | | |
| US 2009148800 | A1 | 11-06-2009 | US | 2009148800 A1 | 11-06-2009 |
| | | | US | 2011017437 A1 | 27-01-2011 |
| WO 2011019345 | A1 | 17-02-2011 | AR | 077826 A1 | 28-09-2011 |
| | | | AU | 2009351106 A1 | 01-03-2012 |
| | | | CA | 2770135 A1 | 17-02-2011 |
| | | | CN | 102713533 A | 03-10-2012 |
| | | | EP | 2464950 A1 | 20-06-2012 |
| | | | KR | 20120047290 A | 11-05-2012 |
| | | | SG | 178100 A1 | 29-03-2012 |
| | | | US | 2012125124 A1 | 24-05-2012 |
| | | | WO | 2011019345 A1 | 17-02-2011 |

For more details about this annex : see Official Journal of the European Patent Office, No. 12/82